# EUROPÄISCHE PATENTSCHRIFT

(11) **EP 2 337 707 B1**
(45) Veröffentlichungstag und Bekanntmachung des Hinweises auf die Patenterteilung: **18.12.2013**
(21) Anmeldenummer: 09784028.4
(22) Anmeldetag: 15.10.2009
(51) Int. Cl.: B60Q 1/52, F02D 11/10

(54) **INTEGRIERTES SYSTEM MIT NOTLAUFMODUS**
INTEGRATED LIMP HOME SYSTEM
SYSTÈME INTÉGRÉ DE FONCTIONNEMENT DÉGRADÉ

(30) Priorität: 20.10.2008 DE 102008052322
(43) Veröffentlichungstag der Anmeldung: 29.06.2011
(73) Patentinhaber: Continental Automotive GmbH, 30165 Hannover (DE)
(72) Erfinder: EDSPERGER, Markus, 94377 Steinach (DE); KELLNER, Jürgen, 93059 Regensburg (DE); LABERER, Franz, 93059 Regensburg (DE); PÖPPERL, Andreas, 93093 Donaustauf (DE); REICHOW, Dirk, 93173 Wenzenbach (DE)
(86) Internationale Anmeldenummer: PCT/EP2009/063488
(87) Internationale Veröffentlichungsnummer: WO 2010/046303

(56) Entgegenhaltungen:
- EP-A- 0 691 244
- WO-A-2008/037769
- WO-A-2009/103371
- DE-A1- 10 127 056
- DE-A1- 19 919 729
- DE-A1-102006 013 381
- FR-A- 2 895 535
- GB-A- 2 256 506
- JP-A- 63 314 347
- US-A1- 2007 016 340

## Beschreibung

Die Erfindung betrifft einen integrierten Schaltkreis.

Ferner betrifft die Erfindung ein Fahrzeug.

Die Erfindung betrifft ferner ein Verfahren zum Durchführen eines Limp Home-Betriebsmodus.

Darüber hinaus betrifft die Erfindung ein Programm-Element.

Die Erfindung betrifft ferner ein Computerlesbares Speichermedium.

Moderne Kraftfahrzeuge bilden komplexe Systeme von Hardware und Software. Zur Regelung und Steuerung des mechatronischen Systems Automobil kommt eine hohe Anzahl verschiedenster Steuergeräte zum Einsatz. Die Gesamtheit aller Steuergeräte bildet ein hochgradig vernetztes System auf Grundlage unterschiedlicher Bussysteme bzw. Kommunikationseinrichtungen. Die mit einem solchen System gegebene Heterogenität von Hard- und Software ist hochkomplex.

In Kraftfahrzeugen ist die Überwachung der einwandfreien Funktion der einzelnen Komponenten wichtig. Im Fehlerfall kann es erforderlich sein, zumindest Basisfunktionen betreffend die Sicherheit des Kraftfahrzeuges aufrechtzuerhalten, selbst wenn ein Fehler in dem elektronischen Regelungssystem auftritt. Hierzu gehört zum Beispiel, dass im Falle eines Liegenbleibens eines Automobils in einem Tunnel eine Warnfunktion durch zum Beispiel aktivierte Scheinwerfer/Rücklichter bereitgestellt werden kann.

WO 2008/037769 offenbart ein Verfahren zum Betreiben eines Fahrzeuges, bei dem beim Auftreteten eines Betriebsfehlers ein äußeres Warnsignal mit der Bremsleuchte des Fahrzeuges erzeugt wird.

DE 11 2006 000 702 offenbart ein Fahrzeuggefahrwarnsystem, das einen Blinkschalter und einen Schaltkreis aufweist, betätigbar von einem Fahrzeugführer oder einem Fahrzeuginsassen, um mindestens zwei hintere Fahrtrichtungsanzeigen des Fahrzeugs und ein oben und zentral angeordnetes Bremslicht im rückwärtigen Bereich des Fahrzeugs blinken zu lassen, wobei das oben und zentral angeordnete Bremslicht mit dem Blink-schaltkreis verbunden ist, so dass es gleichzeitig mit den beiden hinteren Fahrtrichtungsanzeigen blinkt, wobei ein effektiveres Gefahrwarnsignal durch die Fläche erzeugt ist, die durch die drei Abstände zwischen den hinteren Lichtern und dem oben und zentral angeordneten Bremslicht eingegrenzt wird.

DE 4125302 A1 offenbart eine Einrichtung zur Überwachung eines elektrischen Verbrauchers in einem Fahrzeug, der von wenigstens einem von einer Steuereinheit gebildeten impulsförmigen Steuersignal über wenigstens ein Schaltmittel betätigbar ist. Diese Einrichtung umfasst Mittel zur Erfassung von elektrischen Größen im Bereich des Verbrauchers, Mittel zum Vergleich dieser Größen mit vorbestimmten Grenzwerten sowie Fehlererkennungsmittel zur Erkennung eines Fehlers auf der Basis dieses Vergleichs. Dabei bewerten die Fehlererkennungsmittel das Vergleichsergebnis zur Erkennung eines Fehlerzustandes nach Maßgabe des Betätigungszustands des elektrischen Verbrauchers.

Allerdings sind konventionelle Fehlerüberwachungs- und Beseitigungssystems komplex und aufwendig in der Herstellung.

Der Erfindung liegt die Aufgabe zugrunde, ein fehlerrobustes Limp Home System bereitzustellen.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein monolithisch integrierter Schaltkreis für ein Fahrzeug geschaffen, wobei der Schaltkreis ein Substrat (zum Beispiel ein Halbleitersubstrat), eine in und/oder auf dem Substrat monolithisch integrierte Limp Home-Einheit (zum Beispiel eine integrierte Schaltkreiskomponente) zum Erzeugen eines Steuersignals zum Steuern eines Limp Home-Betriebsmodus des Fahrzeugs, und eine in und/oder auf dem Substrat monolithisch integrierte Umgebungswarn-Einheit (zum Beispiel eine andere integrierte Schaltkreiskomponente) zum Erzeugen eines Umgebungswarn-Signals zum Warnen einer Umgebung des Fahrzeugs im Falle des Limp Home-Betriebsmodus aufweist.

Gemäß einem anderen Ausführungsbeispiel der Erfindung wird ein Fahrzeug (beispielsweise ein Automobil (zum Beispiel ein Kraftfahrzeug, insbesondere ein Personenkraftfahrzeug oder ein Lastkraftfahrzeug), ein Zug, ein Luftfahrzeug (zum Beispiel ein Flugzeug, ein Hubschrauber oder ein Zeppelin) oder ein Schiff) mit einem monolithisch integrierten Schaltkreis (einem IC) mit den oben genannten Merkmalen zum Erzeugen von Steuersignalen zum Betreiben des Fahrzeugs in einem Limp Home-Betriebsmodus geschaffen.

Gemäß einem weiteren Ausführungsbeispiel der Erfindung wird ein Verfahren zum Durchführen eines Limp Home-Betriebsmodus eines Fahrzeugs mittels eines monolithisch integrierten Schaltkreises bereitgestellt, wobei bei dem Verfahren ein Steuersignal (oder mehrere Steuersignale) zum Steuern des Limp Home-Betriebsmodus des Fahrzeugs mittels einer in und/oder auf einem Substrat monolithisch integrierten Limp Home-Einheit erzeugt wird, und ein Umgebungswarn-Signal (oder mehrere Umgebungswarn-Signale) zum Warnen einer Umgebung des Fahrzeugs im Falle des Limp Home-Betriebsmodus mittels einer in und/oder auf dem Substrat monolithisch integrierten Umgebungswarn-Einheit erzeugt wird.

In einem computerlesbaren Speichermedium gemäß einem Ausführungsbeispiel der vorliegenden Erfindung ist ein Programm zum Durchführen eines Limp Home-Betriebsmodus eines Fahrzeugs gespeichert, welches Programm zum Durchführen oder Steuern des Verfahrens mit den oben beschriebenen Merkmalen mittels des monolithisch integrierten Schaltkreises eingerichtet ist, wenn es von einem Prozessor ausgeführt wird.

Ein Programm-Element (Computerprogramm-Element) gemäß einem Ausführungsbeispiel der vorliegenden Erfindung zum Durchführen eines Limp Home-Betriebsmodus eines Fahrzeugs weist die oben beschriebenen Verfahrensschritte auf (bzw. steuert diese oder führt diese durch), wenn es mittels des monolithisch integrierten Schaltkreises ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Unter einem "monolithisch integriertem Schaltkreis" wird im Rahmen dieser Beschreibung insbesondere ein mikroelektronischer Schaltkreis auf der Basis der Halbleitertechnologie, insbesondere der Siliziumtechnologie, verstanden. Gemäß dieser Technologie sind in einem einzigen gemeinsamen Substrat, zum Beispiel in einem Siliziumchip oder Wafer, eine Mehrzahl von integrierten Teilschaltkreisen gebildet, unter Verwendung von Verfahren wie Abscheiden, Lithographie, Ätzen, etc.

Der Begriff "Substrat" bezeichnet insbesondere ein Halbleitersubstrat, zum Beispiel einen Siliziumchip oder einen Siliziumwafer. Allerdings können andere Substratmaterialien verwendet werden, sofern darin elektronische Bauelemente aktiver und/oder passiver Art monolithisch integriert werden können.

Unter dem Begriff "Limp Home-Betriebsmodus" kann im Rahmen dieser Beschreibung insbesondere ein Betriebsmodus verstanden werden, der im Falle eines auftretenden Fehlers in einem Regelungssystem oder Steuerungssystem eines Fahrzeugs zumindest eine Grundversorgung aufrechterhält, welche zumindest grundlegende Sicherheitsfunktionen des Fahrzeugs sicherstellen sollen, die beispielsweise gesetzlich vorgeschrieben sein können. Zu diesen Grundsicherungsfunktionen kann zum Beispiel das Aufrechterhalten einer äußeren Beleuchtung des Fahrzeugs gehören, um anderen Verkehrsteilnehmern zu ermöglichen, ein liegengebliebenes Fahrzeug frühzeitig zu erkennen bzw. über mögliche Gefahren informiert zu werden. Bloße Komfortfunktionen können in dem Limp Home-Betriebsmodus deaktiviert sein.

Gemäß einem exemplarischen Ausführungsbeispiel können sowohl eine Limp Home-Einheit, das heißt ein elektronischer Teilschaltkreis zum Bewerkstelligen einer Limp Home-Funktionalität, sowie eine Umgebungswarn-Einheit, das heißt ein elektronischer Teilschaltkreis zum Bereitstellen einer Umgebungswarnung optischer Natur in einem Schadensfall eines Fahrzeugs, auf einem einzigen gemeinsamen IC vorgesehen werden, was sowohl die Komplexität als auch die Kosten des Limp Home-Systems verringert. Somit können bei einem verringerten Platzbedarf alle zur Limp Home-Steuerung erforderlichen Komponenten auf einem einzigen Materialstück zusammenfasst werden, womit kurze Signalwege und ein fehlerrobuster Betrieb erreicht werden können. Dies vereinfacht signifikant die Funktionalität einer Limp Home-Steuerung, indem alle hierfür erforderlichen Komponenten auf einem einzigen integrierten Schaltkreis zusammengefasst werden können. Elektronische Kompatibilitätsprobleme oder aufwändige und fehleranfällige Schnittstellen zwischen einzelnen verteilten Systemkomponenten oder diskreten Chips können erfindungsgemäß somit vermieden werden.

Im Weiteren werden zusätzliche Ausführungsbeispiele des monolithisch integrierten Schaltkreises beschrieben. Allerdings gelten diese Ausgestaltungen auch für das Fahrzeug, das Verfahren, das computerlesbare Speichermedium und das Programm-Element.

Der monolithisch integrierte Schaltkreis kann als System Basis Chip (SBC) eingerichtet sein. Als System Basis Chip kann ein integrierter Schaltkreis bezeichnet werden, auf dem mehrere für die Realisierung einer Elektronikbaugruppe notwendige Funktionen zusammengefasst sind. Diese Funktionsgruppen können zumindest eines aus der Gruppe aufweisen, die besteht aus einem Spannungsregler, einer Spannungsüberwachung, einem Reset-Generator, einem Watchdog, einem Bus-Interface (zum Beispiel CAN-Bus, LIN-Bus), einer Wakeup-Logik und einem Leistungstreiber. Die Leistungsbandbreite eines solchen System Basis Chips kann sehr unterschiedlich sein, wobei komplexe Baugruppen über ein SPI (Serial Peripheral Interface) konfiguriert werden können, alternativ aber auch einfache Funktionalitäten bereitstellen können. Ein solcher System Basis Chip kann als Automobilsteuergerät eingesetzt werden, zum Beispiel zusammenwirkend mit einer Mikrosteuerung oder einem anderen Prozessor.

Der Schaltkreis kann eine in und/oder auf dem Substrat monolithisch integrierte Watchdog-Einheit zum Generieren eines Watchdog-Signals im Falle einer Fehlfunktion einer mit der Watchdog-Einheit koppelbaren Funktionseinheit des Fahrzeugs aufweisen, wobei die Limp Home-Einheit zum Aktivieren des Limp Home-Betriebsmodus in Reaktion auf das Watchdog-Signal eingerichtet sein kann. Eine Watchdog-Einheit kann eine integrierte Schaltkreiskomponente sein, welche mit einem Aktuator (zum Beispiel einem Sensor) des Automobils kommunizierfähig gekoppelt sein kann. Der Watchdog-Einheit können von dem Sensor in regelmäßigen Zeitabständen (zum Beispiel innerhalb von bestimmten Zeitfenstern) Kontrollsignale übermittelt werden. Wenn diese Signale sich verändern oder nicht mehr detektiert werden können, kann die Watchdog-Einheit entsprechende Meldung an andere Komponenten des Schaltkreises machen, da an dem zugehörigen Aktuator ein Problem aufgetreten ist oder sein könnte. Dadurch kann eine Aktivierung des Limp Home-Betriebsmodus mittels der Watchdog-Einheit getriggert werden, der gerade bei einer Fehlfunktion zumindest sicherheitsrelevante Funktionen eines Fahrzeugs aufrechterhalten soll.

In dem Limp Home-Betriebsmodus des Fahrzeugs kann dieses trotz Vorliegens einer Fehlfunktion in einem Notbetriebszustand gehalten werden. Dieser Notbetriebszustand kann zum Beispiel basierend auf einem vorgespeicherten Algorithmus oder Datensatz bestimmte Funktionen, die eine hohe Wichtigkeit haben, weiterhin bereitstellen, und andere Funktionen, die eine geringere Wichtigkeit haben, zwecks Einsparung von Ressourcen nicht mehr bereitstellen. Welche Funktionen weiterhin ermöglicht werden, kann voreingestellt werden oder auch benutzerseitig konfiguriert werden. So können beispielsweise gesetzlich vorgeschriebene Sicherheitsfunktionen, wie die Außenbeleuchtung eines Fahrzeugs, aufrechterhalten werden, benutzerspezifische Funktionen allerdings auf einige bestimmte Funktionen (zum Beispiel Wischer oder andere sicherheitsrelevante Funktionen) beschränkt werden.

Die Umgebungswarn-Einheit ist zum Erzeugen eines optischen Permanentsignals an einer Außenseite des Fahrzeugs im Falle des Limp Home-Betriebsmodus eingerichtet. Unter einem Permanentsignal kann dabei verstanden werden, dass ein menschlicher Benutzer ein solches Signal als im Wesentlichen durchgehend empfindet oder wahrnimmt. Dennoch kann auch das Permanentsignal mit einer bestimmten Frequenz, die ausreichend hoch sein sollte (zum Beispiel 100 Hz), betrieben werden. Bei einer solchen hohen Frequenz kann auch ein deutlich von eins unterschiedlicher Duty-Cycle verwendet werden, das heißt, ein Prozentsatz (zum Beispiel 20%), während welchem die Lichtemission aktiv ist. So ein Duty-Cycle kann zum Beispiel bei unter 30% liegen, womit ein Dimmen eines ansonsten zu starken (und daher energieintensiven) Signals erreicht werden kann.

Die Umgebungswarn-Einheit ist zum Verwenden eines Bremslichts als Rücklicht zum Erzeugen des optischen Permanentsignals eingerichtet. Das Bremslicht eines Kraftfahrzeugs kann zum Beispiel eine relativ hohe Normalleistung von 22 Watt haben. Um ein optisches Permanentsignal zu erreichen, das von einer Fahrzeugbatterie ausreichend lang erzeugt werden kann, kann dieses Bremslicht heruntergedimmt werden, um als Rücklicht mit einer geringeren Leistung von zum Beispiel 5 Watt betrieben zu werden.

Anders ausgedrückt ist die Umgebungswarn-Einheit zum Reduzieren einer regulären Leistung des Bremslichts als Rücklicht zum Erzeugen des optischen Permanentsignals eingerichtet. Ergänzend kann die Umgebungswarn-Einheit zum Reduzieren einer regulären Leistung eines Blinkers zum Erzeugen des optischen Blinksignals eingerichtet sein.

Die Umgebungswarn-Einheit kann ergänzend zum Erzeugen eines optischen Blinksignals an einer Außenseite des Fahrzeugs im Falle des Limp Home-Betriebsmodus eingerichtet sein. Ein solches Blinken kann an Blinkern des Kraftfahrzeugs erfolgen. Das optische Blinksignal kann mit einer vorgegebenen Blinkfrequenz (zum Beispiel 1,25 Hz) betrieben werden, was von außerhalb des Fahrzeugs befindlichen Personen als ein Warnsignal wahrgenommen werden kann. Zusätzlich oder alternativ zu dem optischen Blinksignal können zum Beispiel auch akustische Warnsignale, wie zum Beispiel ein gepulstes oder dauerhaftes Hubsignal eingesetzt werden. Ein zum Beispiel in einem Tunnel oder in einer unübersichtlichen Kurve liegengebliebenes Fahrzeug kann dadurch trotz des Ausfalls des Bordnetzes in einem Limp Home-Betriebsmodus gehalten werden, in dem andere Verkehrsteilnehmer dieses Automobil erkennen können.

Die Limp Home-Einheit kann zum Erzeugen des Steuersignals derart eingerichtet sein, dass mittels des Steuersignals bestimmt ist, welche Funktionen des Fahrzeugs in dem Limp Home-Betriebszustand durch den Benutzer aktivierbar sind. Das Aufrechterhalten von Notfunktionen kann es auch erforderlich machen, bestimmte Funktionen des Benutzers in dem Fahrzeug dem Benutzer nicht mehr zur Aktivierung bereitzustellen. Dies können zum Beispiel nicht unbedingt erforderliche oder nicht sicherheitsrelevante Funktionen wie eine Sitzheizung oder ein Navigationssystem sein. Wichtige Grundfunktionen, wie zum Beispiel eine Wischerfunktion oder andere sicherheitsrelevante Funktionen, können dabei bereitgestellt bleiben. Wenn ein Benutzer eine Funktion tatsächlich aktiviert, ermittelt eine Entscheidungslogik, ob die ausgewählte Funktion in dem Limp Home-Betriebsmodus erlaubt ist und somit aktiviert wird, oder nicht erlaubt ist und somit nicht aktiviert wird.

Die Limp Home-Einheit kann zum Erzeugen des Steuersignals zum Steuern der Umgebungswarn-Einheit eingerichtet sein. Somit kann die Limp Home-Einheit zum Beispiel ein Watchdog-Signal als Eingangssignal erhalten, und als Ausgangssignale einerseits andere Komponenten des Fahrzeugs in einen Limp Home-Betriebszustand bringen, andererseits aber auch die Umgebungswarn-Einheit entsprechend ansteuern, dass zum Beispiel eine äußere Notbeleuchtung (zum Beispiel Rücklicht und/oder Blinker) aufrechterhalten werden kann.

Die Limp Home-Einheit und die Umgebungswarn-Einheit können eingerichtet sein, das Steuersignal und das Umgebungswarn-Signal einem extern von dem Substrat vorgesehenen Microcontroller bereitzustellen. Ein Microcontroller kann mit dem integrierten Schaltkreis funktionell zusammenwirken, aber als separates Modul vorgesehen sein. Vereinfacht ausgedrückt kann der Microcontroller die Steuerung des Fahrzeugs außerhalb eines Limp Home-Zustands, das heißt in einem Normalzustand, bewerkstelligen. Im Gegensatz dazu kann in einem Limp Home-Betriebszustand der integrierte Schaltkreis die Steuerfunktion übernehmen.

Der Schaltkreis kann als Application Specific Integrated Circuit (ASIC) eingerichtet sein. Eine solche anwendungsspezifische integrierte Schaltung kann für eine konkrete Anwendung entworfen und bei einem Halbleiterhersteller gefertigt werden. Ein ASIC kann auch als Semi-Custom IC bezeichnet werden.

Im Weiteren werden zusätzliche Ausgestaltungen des Fahrzeugs beschrieben. Diese gelten auch für den Schaltkreis, für das Verfahren, für das Programm-Element und für das computerlesbare Speichermedium.

Das Fahrzeug kann zum Beispiel ein Automobil (zum Beispiel ein Kraftfahrzeug, insbesondere ein Personenkraftfahrzeug oder Lastkraftfahrzeug) sein. Es ist aber auch möglich, das erfindungsgemäße Steuersystem in einem Zug, in einem Luftfahrzeug (zum Beispiel einem Flugzeug, einem Hubschrauber oder einem Zeppelin) oder in einem Schiff zu implementieren.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.
Figur 1 zeigt einen monolithisch integrierten Schaltkreis gemäß einem exemplarischen Ausführungsbeispiel der Erfindung.
Figur 2 zeigt ein Fahrzeug gemäß einem exemplarischen Ausführungsbeispiel der Erfindung.
Figur 3 zeigt einen Schaltplan eines monolithisch integrierten Schaltkreises gemäß einem exemplarischen Ausführungsbeispiel der Erfindung.
Figur 4 zeigt das Zusammenspiel zwischen einem monolithisch integrierten Schaltkreis gemäß einem exemplarischen Ausführungsbeispiel der Erfindung und einem Microcontroller.

Die Darstellungen in den Figuren sind schematisch und nicht maßstäblich. Gleiche oder ähnliche Komponenten in unterschiedlichen Figuren sind mit gleichen Bezugsziffern versehen.

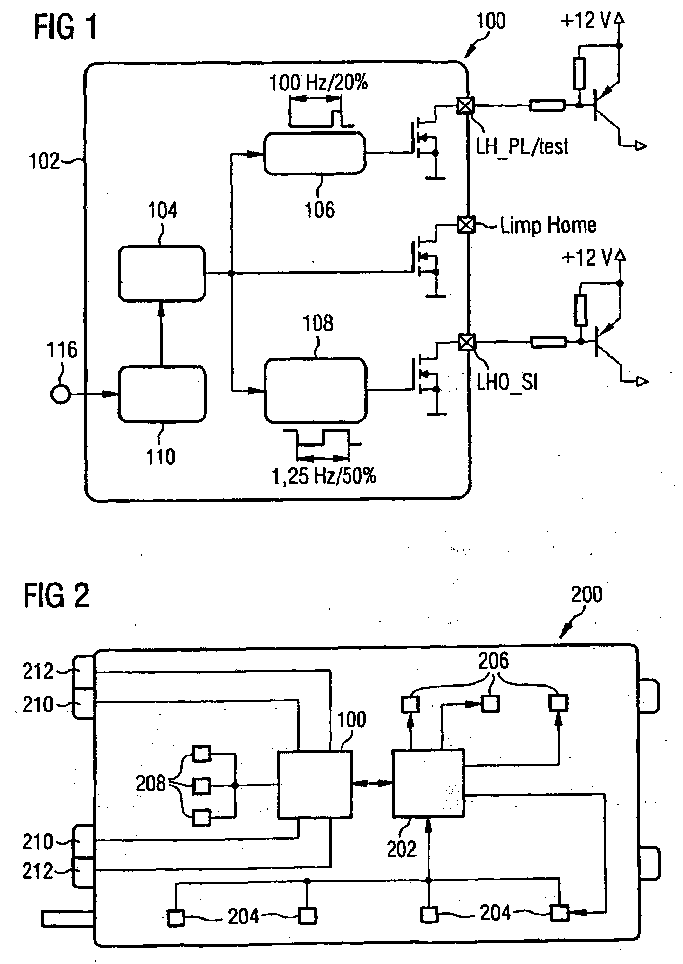

Figur 1 zeigt einen monolithisch integrierten Schaltkreis 100 für ein Fahrzeug gemäß einem exemplarischen Ausführungsbeispiel der Erfindung.

Der Schaltkreis 100 enthält einen Siliziumchip 102 als Substrat, in dem eine Anzahl unterschiedlicher integrierter Teilschaltkreise integriert sind, wie im Weiteren näher beschrieben.

So ist in dem Siliziumchip 102 eine Limp Home-Einheit 104 zum Erzeugen eines Steuersignals zum Steuern eines Limp Home-Betriebsmodus des Fahrzeugs vorgesehen. Ebenso monolithisch in dem Siliziumchip 102 integriert sind eine erste Umgebungswarn-Einheit 106 und eine zweite Umgebungswarn-Einheit 108. Die Umgebungswarn-Einheiten 106, 108 sind jeweils zum Erzeugen eines jeweiligen Umgebungswarn-Signals zum Warnen von Personen in einer Umgebung des Fahrzeugs im Falle des Limp Home-Betriebsmodus eingerichtet. Außerhalb des Limp Home-Betriebsmodus, das heißt in einem Normal-Betriebsmodus des Fahrzeugs, sind die Teilschaltkreise 104, 106, 108 in einem Ruhemodus oder deaktiviert.

Das als System Basis Chip konfigurierte System 100 hat in dem Siliziumchip 102 darüber hinaus eine monolithisch integrierte Watchdog-Einheit 110, das heißt einen weiteren Teilschaltkreis, zum Generieren eines Watchdog-Signals im Falle einer Fehlfunktion einer mit der Watchdog-Einheit 110 koppelbaren Funktionseinheit 116 des Fahrzeugs. Wie in Figur 1 gezeigt, ist die Funktionseinheit 116, zum Beispiel eine Motorsteuerung oder ein elektrischer Fensterheber, außerhalb des integrierten Schaltkreises 100 vorgesehen. Im normalen Betriebszustand sendet die Funktionseinheit 116 in regulären Abständen Steuersignale an die Watchdog-Einheit 110. Nur wenn diese außerhalb eines bestimmten Zeitfensters nicht mehr gesendet werden, erkennt die Watchdog-Einheit 110 dies und übermittelt ein entsprechendes Steuersignal an die Limp Home-Einheit 104. Dieses Steuersignal enthält die Information, dass die Funktionseinheit 116 nicht mehr regulär funktioniert und daher die Limp Home-Einheit 104 den Betriebszustand des Fahrzeugs in einen Notzustand umschalten soll.

Basierend auf dem Watchdog-Signal generiert die Limp Home-Einheit 104 ein Steuersignal "Limp Home", das an einen Microcontroller (nicht gezeigt) oder alternativ direkt an die Funktionseinheit 116 und/oder weitere Entitäten des Automobils übermittelt werden kann, um diese in den Limp Home-Modus zu überführen. Anstelle eines einzigen Steuersignals kann auch eine Mehrzahl unterschiedlicher Steuersignale generiert werden. Darüber hinaus wird der ersten Umgebungswarn-Einheit 106 und der zweiten Umgebungswarn-Einheit 108 das Steuersignal "Limp Home" oder ein anderes Steuersignal bereitgestellt.

Die erste Umgebungswarn-Einheit 106 erzeugt daraus ein Steuersignal "LH_PL/test", das ein 100 Hz Signal mit einem Duty-Cycle von 20% bereitstellt, so dass ein Bremslicht eines Rücklichts eines Fahrzeugs nur zu einem Fünftel der Zeit aktiviert ist, allerdings mit einer so hohen Frequenz von 100 Hz, dass dieses Signal als gedimmtes Bremssignal, das heißt als ein im Wesentlichen permanentes Bremssignal verringerter Intensität von einem menschlichen Benutzer wahrgenommen wird.

Die zweite Umgebungswarn-Einheit 108 erzeugt ein Steuersignal "LHO_SI", mit dem eine Blinkbeleuchtung des Kraftfahrzeugs generiert wird, im gezeigten Ausführungsbeispiel mit einer Frequenz von 1,25 Hz. Ein zugehöriger Duty-Cycle liegt bei 50%. Dadurch ist auch in Gefahrensituationen eine ausreichend gut wahrzunehmende Außenbeleuchtung des Kraftfahrzeugs ermöglicht, was Teil des Limp Home-Betriebsmodus ist.

Somit kann auch in einem Limp Home-Betriebsmodus das Fahrzeug in einem Notbetriebszustand gehalten werden, womit eine erhöhte Sicherheit erreicht ist.

Das Steuersignal "Limp Home" kann definieren, welche Funktionen des Fahrzeugs in dem Limp Home-Betriebszustand durch den Benutzer aktivierbar sind. Dies können zum Beispiel alle sicherheitsrelevanten Funktionen sein, nicht hingegen reine Komfortfunktionen. Dadurch kann gewährleistet sein, dass auch in dem Limp Home-Betriebszustand das Automobil noch ausreichend lang betrieben werden kann, bis Hilfe naht.

Der integrierte Schaltkreis 100 kann als ASIC ausgeführt sein.

Somit kann erfindungsgemäß die Charakteristik eines System Basic Chips (SBC) sogar in einem Fehlerzustand verbessert werden und eine erhöhte Sicherheit erreicht werden. Dies kann insbesondere dadurch erfolgen, dass konventionell modular realisierte Komponenten in einem gemeinsamen ASIC zusammengefasst werden. In einem Fehlerzustand, in dem zum Beispiel ein Controller nicht mehr ordnungsgemäß funktioniert, kann ein Watchdog (als Teil des SBCs) das Ausbleiben eines Funktionsüberwachungssignals feststellen und eine Limp Home-Einheit entsprechend triggern, eine bestimmte Aktion zu initiieren, insbesondere den Limp Home-Modus zu aktivieren. Ausführungsbeispiele der Erfindung stellen ein zentralisiertes System bereit, auf dem auf einem Basischip (SBC) die Limp Home-Funktionen zusammengefasst sind, wodurch eine komplexe verteilte Struktur vermieden ist.

Somit kann erfindungsgemäß eine Verbesserung eines Fail Save Verhaltens eines elektronischen Systems mittels Reduzierens der Anforderungen an einen dualen Controller/eine Überwachungs-IC-Architektur geschaffen werden. Dadurch kann die Funktionalität während eines Fehlzustands garantiert werden, zum Beispiel einzig und allein durch das Vorsehen eines System Basis Chips mit allen hierfür erforderlichen Komponenten. Dies erlaubt es, die Komplexität des Sicherheitskonzepts herabzusetzen. Insbesondere können eine Hazard Warning und PWM Warnung in einen SBC integriert werden.

Wenn ein solcher Limp Home-Modus aktiviert wird (zum Beispiel getriggert durch ein Ausbleiben eines Signals für einen Watchdog), kann ein Rücklicht (zum Beispiel 5 Watt) mittels eines Bremslicht (zum Beispiel 27 Watt) realisiert werden. Dies kann mittels eines PWM (100 Hz/20 % Duty-Cycle) Signals erreicht werden, welches das 27 Watt Bremslicht zu einem 5 Watt Rücklicht leistungsreduzieren kann.

Ein Hazard Warning System kann bei Aktivieren eines Limp Home-Modus ein Hazard Warning Signal mit einer Frequenz von 1,25 Hz bei einem Duty-Cycle von 50 % generieren. In diesem Zustand kann ein Blinklicht eines Blinkers generiert werden.

Bei dem Ausführungsbeispiel der Erfindung gemäß Figur 1 ist das Hazard Warning/PWM Merkmal in den SBC 100 integriert. Mittels Integrierens dieser Funktionen in ein Limp Home-System "On-Chip" kann die Fehlerrobustheit des Systems verbessert werden.

Das Signal "Limp Home" kann eine statische Ausgabe sein, die anzeigt, dass ein Limp Home-Modus aktiviert ist. Das Steuersignal "LH_PL/test" kann zum Erzeugen eines zusätzlichen "PWM"-Signals dienen, wenn Limp Home aktiv ist. Das Signal "LHO_SI" kann zum Erzeugen eines zusätzlichen Gefahrwarnsignals dienen, wenn Limp Home aktiv ist. Das Signal "Limp Home" kann aktiv sein, wenn der Limp Home-Modus aktiviert ist. Es kann mit dem Watchdog-Trigger der Watchdog-Einheit 110 und mit einer SPI-Programmierung gelöscht werden. Das 1,25 Hz Blinksignal gemäß dem Steuersignal "LHO_SI" kann aktiv sein, wenn "Limp Home" aktiv ist. Dieses Signal kann zu einem Blinken des Blinkers führen. Das gepulste Signal "LHO_PL/test" kann aktiv sein, wenn "Limp Home" aktiv ist. Hierfür kann eine gepulste Ausgabe mit einer ausreichend hohen Frequenz eingesetzt werden, so dass das Bremslicht gedimmt als Rücklicht verwendet wird.

Im Weiteren wird bezugnehmend auf **Figur 2** ein Fahrzeug 200 gemäß einem exemplarischen Ausführungsbeispiel der Erfindung beschrieben.

Das Fahrzeug 200 enthält einen monolithisch integrierten Schaltkreis 100 zum Steuern eines Limp Mode-Betriebsmodus und einen Microcontroller 202, der bidirektional kommunizierfähig mit dem integrierten Schaltkreis 100 ausgestaltet ist. Der Microcontroller 202 steuert in einem normalen Betriebssystem des Fahrzeugs 200 das Zusammenspiel von dessen Komponenten. Während eines Limp Mode-Betriebszustands übernimmt der integrierte Schaltkreis 100 die Steuerung des Limp Mode-Betriebszustands.

Während eines normalen Modus erhält der Microcontroller 202 Steuersignale von angeschlossenen Entitäten 204, wie zum Beispiel Sensoren oder Aktuatoren. Basierend auf diesen Steuerinformationen steuert der Microcontroller 202 diese und/oder andere Komponenten, die in Figur 2 mit Bezugszeichen 206 versehen sind.

In ähnlicher Weise enthält auch der integrierte Schaltkreis 100 Steuersignale von Aktuatoren oder Sensoren 208. Sollte eine Funktionseinheit in dem Automobil 200 ausfallen, so wird dieses einer Watchdog-Einheit des ICs 100 gemeldet. Daraufhin steuert der IC 100 Rücklichter 210 in einer Weise, dass diese eine Gefahrenbeleuchtung auf Basis eines gedimmten Bremslichtes bewerkstelligen. Auch werden in einem solchen Limp Home-Betriebsmodus Blinker 212 zum Blinken gebracht.

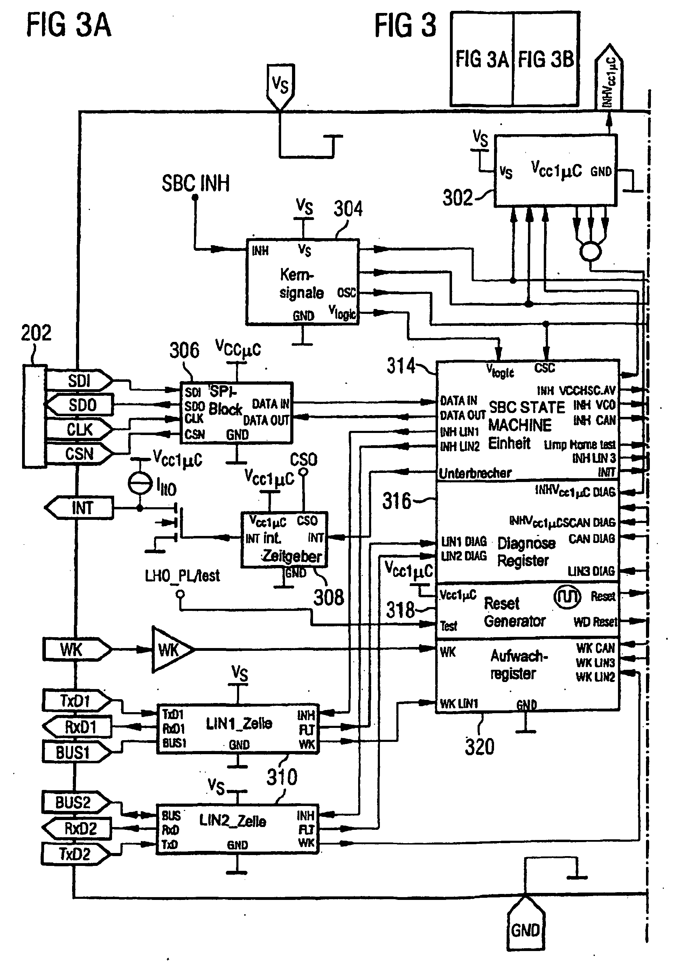

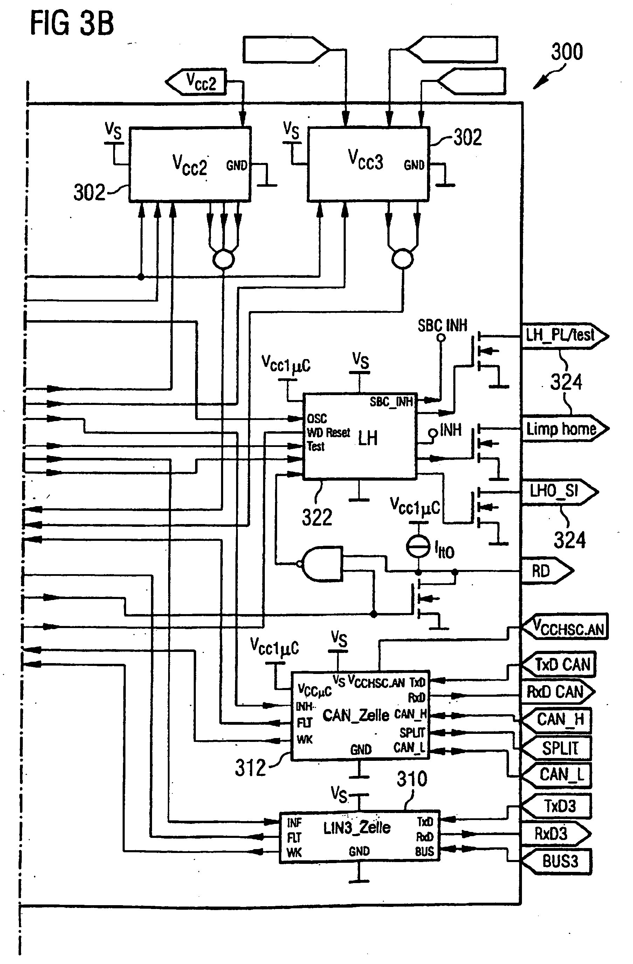

Im Weiteren wird bezugnehmend auf **Figur 3** ein Blockdiagramm eines integrierten System Basic Chips 300 gemäß einem exemplarischen Ausführungsbeispiel der Erfindung beschrieben.

Der integrierte Schaltkreis 300 enthält Spannungsversorgungseinheiten 302, welche eine Spannungsversorgung des ICs 300 sicherstellen. Eine Core Signal Einheit 304 kann interne Spannungswerte bzw. ein Oszillatorsignal generieren, die für die Spannungsregelung innerhalb des ICs 300 verwendet werden können. Ein SPI-Block 306 dient als Kommunikationsschnittstelle mit einem Mikroprozessor (nicht gezeigt, zum Beispiel der Mikroprozessor 202 aus Fig. 2), dessen Ankopplung an Kontakte des ICs 300 in Figur 3 ebenfalls gezeigt sind.

Ein interner Zeitgeber 308 steuert das Timing-Management innerhalb des ICs 300.

Der IC 300 enthält darüber hinaus drei LIN-Zellen (Local Interconnect Network) 310, die eine LIN-Kommunikation zwischen dem IC 300 und angeschlossenen verteilten Komponenten (zum Beispiel einem Regensensor, einem Fensterheber, einem Dachmodul, einer Lenkradsteuerung, einem Bedienelement, etc.) oder anderen Aktuatoren bewerkstelligen. Auch eine CAN-Zelle (Controller Area Network) 312 ist zu ähnlichen Zwecken in dem IC 300 vorgesehen.

Ein Local Interconnect Network (LIN Bus) ist ein Feldbusstandard, der die effiziente Vernetzung von Sensoren, Aktoren und sonstigen Komponenten im Fahrzeugbau ermöglicht. Ein Beispiel für den Einsatz eines solchen LIN Bus ist die Vernetzung innerhalb einer Tür oder eines Sitzes eines Kraftfahrzeugs.

Ein Controller Area Network (oder CAN Bus) ist ein asynchrones serielles Feldbussystem für die Vernetzung von Steuergeräten in Automobilen. Unter Verwendung eines CAN Bus können Kabelbäume reduziert und dadurch Gewicht eingespart werden.

Eine SBC State Machine Einheit 314 dient als Ablaufsteuerung des SBC Systems, das heißt realisiert Funktionen wie eine Power-On-Funktion, eine Watchdog-Reaktion, einen Low-Power-Mode, einen Flash-Mode, etc.

Ein Diagnoseregister 316 diagnostiziert die aktuellen Spannungsversorgungswerte, führt eine LIN-Diagnose durch, und gibt Fehler an das LIN-System weiter. Ein Microcontroller kann Diagnose Register auslesen und so den aktuellen Status abfragen.

Ein Reset-Generator 318 kann bei bestimmten Anlässen eine Reset-Funktion auslösen, zum Beispiel bei dem Vorliegen einer Unterspannung, bei einem Fehler des Watchdog-Triggers etc. Ein Wake-Register 320 dient zur Anzeige, ob LIN- oder CAN-Bus-Teilnehmer aktiv senden. Ein solches Aufwachregister 320 kann bei bestimmten Anlässen aufwachen und informiert dann den Microcontroller entsprechend (zum Beispiel wenn eine Autotür geöffnet wird).

Darüber hinaus ist erfindungsgemäß eine Limp Home-Einheit 322 vorgesehen, welche insbesondere die Funktionen der Blöcke 104, 106 und 108 aus Figur 1 durchführen kann.

An Anschlüssen 324 sind die für den Limp Home-Mode relevanten Steuersignale, die auch in Figur 1 gezeigt sind, abnehmbar.

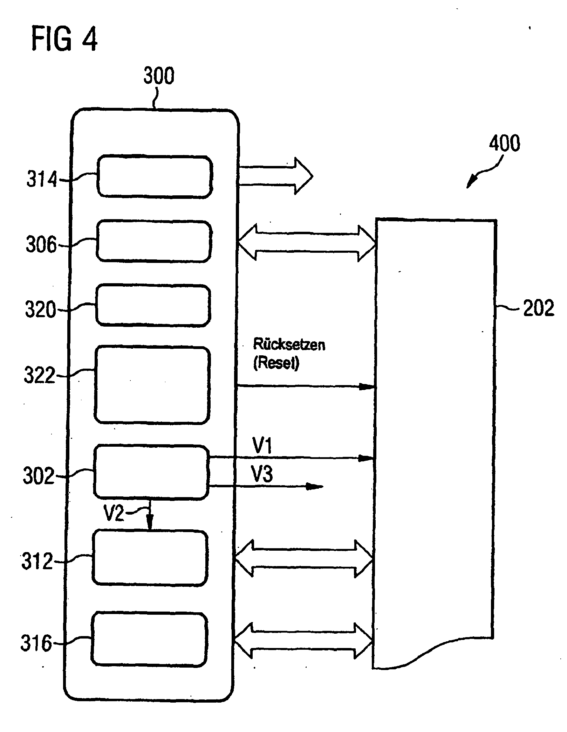

Schließlich zeigt **Figur 4** ein Kommunikationssystem zwischen dem in Figur 3 gezeigten IC 300 und dem Microcontroller 202.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

## Patentansprüche

1. Monolithisch integrierter Schaltkreis (100) für ein Fahrzeug (200), wobei der Schaltkreis (100) aufweist:
• ein Substrat (102);
• eine in und/oder auf dem Substrat (102) monolithisch integrierte Limp Home-Einheit (104) zum Erzeugen eines Steuersignals zum Steuern eines Limp Home-Betriebsmodus des Fahrzeugs (200);
• eine in und/oder auf dem Substrat (102) monolithisch integrierte Umgebungswarn-Einheit (106, 108) zum Erzeugen eines Umgebungswarn-Signals zum Warnen einer Umgebung des Fahrzeugs (200) im Falle des Limp Home-Betriebsmodus,
• wobei die Umgebungswarn-Einheit (106) zum Steuern des Erzeugens eines optischen Permanentsignals an einer Außenseite des Fahrzeugs (200), insbesondere an einem Rücklicht des Fahrzeugs (200), im Falle des Limp Home-Betriebsmodus eingerichtet ist,
• wobei die Umgebungswarn-Einheit (106) zum Verwenden eines Bremslichts als Rücklicht zum Erzeugen des optischen Permanentsignals eingerichtet ist, und
• wobei die Umgebungswarn-Einheit (106) zum Reduzieren einer regulären Leistung des Bremslichts zum Erzeugen des optischen Permanentsignals eingerichtet ist.

2. Schaltkreis (100) nach Anspruch 1, eingerichtet als System Basis Chip.

3. Schaltkreis (100) nach Anspruch 1 oder 2, aufweisend eine in und/oder auf dem Substrat (102) monolithisch integrierte Watchdog-Einheit (110) zum Generieren eines Watchdog-Signals im Falle einer Fehlfunktion einer mit der Watchdog-Einheit (110) koppelbaren Funktionseinheit (116) des Fahrzeugs (200), wobei die Limp Home-Einheit (104) zum Aktivieren des Limp Home-Betriebsmodus in Reaktion auf das Watchdog-Signal eingerichtet ist.

4. Schaltkreis (100) nach einem der Ansprüche 1 bis 3, wobei in dem Limp Home-Betriebsmodus das Fahrzeug (200) trotz Vorliegens einer Fehlfunktion ein Notbetriebszustand aufrecht erhaltbar ist.

5. Schaltkreis (100) nach einem der Ansprüche 1 bis 4, wobei die Umgebungswarn-Einheit (108) zum Steuern des Erzeugens eines optischen Blinksignals an einer Außenseite des Fahrzeugs (200), insbesondere an einem Blinker des Fahrzeugs (200), im Falle des Limp Home-Betriebsmodus eingerichtet ist.

6. Schaltkreis (100) nach einem der Ansprüche 1 bis 5, wobei die Limp Home-Einheit (104) zum Erzeugen des Steuersignals derart eingerichtet ist, dass mittels des Steuersignals bestimmt ist, welche Funktion oder Funktionen des Fahrzeugs (200) in dem Limp Home-Betriebszustand durch den Benutzer aktivierbar ist oder sind.

7. Schaltkreis (100) nach einem der Ansprüche 1 bis 6, wobei die Limp Home-Einheit (104) zum Erzeugen des Steuersignals zum Steuern der Umgebungswarn-Einheit (106, 108) eingerichtet ist.

8. Schaltkreis (400) nach einem der Ansprüche 1 bis 7, wobei die Limp Home-Einheit (104) und die Umgebungswarn-Einheit (106, 108) eingerichtet sind, das Steuersignal und das Umgebungswarn-Signal einem extern von dem Substrat (102) vorgesehenen Microcontrollers (202) bereitzustellen.

9. Schaltkreis (100) nach einem der Ansprüche 1 bis 8, eingerichtet als Application Specific Integrated Circuit.

10. Fahrzeug (200), aufweisend einen monolithisch integrierten Schaltkreis (100) nach einem der Ansprüche 1 bis 9 zum Erzeugen von Steuersignalen zum Betreiben des Fahrzeugs (200) in einem Limp Home-Betriebsmodus.

11. Fahrzeug (200) nach Anspruch 10, ausgewählt aus einer Gruppe bestehend aus einem Automobil, einem Personenkraftfahrzeug, einem Lastkraftfahrzeug, einem Bus, einem Zug, einem Luftfahrzeug und einem Schiff.

12. Verfahren zum Durchführen eines Limp Home-Betriebsmodus eines Fahrzeugs (200) mittels eines monolithisch integrierten Schaltkreises (100), wobei das Verfahren aufweist:
• Erzeugen eines Steuersignals zum Steuern des Limp Home-Betriebsmodus des Fahrzeugs (200) mittels einer in und/oder auf einem Substrat (102) monolithisch integrierten Limp Home-Einheit (104),
• Erzeugen eines Umgebungswarn-Signals zum Warnen einer Umgebung des Fahrzeugs (200) im Falle des Limp Home-Betriebsmodus mittels einer in und/oder auf dem Substrat (102) monolithisch integrierten Umgebungswarn-Einheit (106, 108),
• Einrichten der Umgebungswarn-Einheit (106) zum Steuern des Erzeugens eines optischen Permanentsignals an einer Außenseite des Fahrzeugs (200), insbesondere an einem Rücklicht des Fahrzeugs (200), im Falle des Limp Home-Betriebsmodus,
• Einrichten der Umgebungswarn-Einheit(106) zum Verwenden eines Bremslichts als Rücklicht zum Erzeugen des optischen Permanentsignals, und
• Einrichten der Umgebungswarn-Einheit(106) zum Reduzieren einer regulären Leistung des Bremslichts zum Erzeugen des optischen Permanentsignals.

13. Computerlesbares Speichermedium, in dem ein Programm zum Durchführen eines Limp Home-Betriebsmodus eines Fahrzeugs (200) gespeichert ist, welches Programm zum Durchführen oder Steuern des Verfahrens nach Anspruch 12 auf einem monolithisch integrierten Schaltkreis (100) eingerichtet ist.

14. Programm-Element zum Durchführen eines Limp Home-Betriebsmodus eines Fahrzeugs (200), das, wenn es von einem Prozessor ausgeführt wird, zum Durchführen oder Steuern des Verfahrens nach Anspruch 12 auf einem monolithisch integrierten Schaltkreis (100) eingerichtet ist.

## Claims

1. Monolithically integrated circuit (100) for a vehicle (200), wherein the circuit (100) has
a substrate (102);
a limp home unit (104) which is monolithically integrated into and/or onto the substrate (102) and has the purpose of generating a control signal for controlling a limp home operating mode of the vehicle (200);
a surroundings warning unit (106, 108) which is monolithically integrated into and/or onto the substrate (102) and has the purpose of generating a surroundings warning signal for warning the surroundings of the vehicle (200) in the case of the limp home operating mode,
wherein the surroundings warning unit (106) is configured to control the generation of a continuous visual signal on the outside of the vehicle (200), in particular at a rear light of the vehicle (200), in the case of the limp home operating mode,
wherein the surroundings warning unit (106) is configured to use a brake light as a rear light in order to generate the continuous visual signal, and
wherein the surroundings warning unit (106) is configured to reduce a usual power level of the brake lighting in order to generate the continuous visual signal.

2. Circuit (100) according to Claim 1, configured as a system basis chip.

3. Circuit (100) according to Claim 1 or 2, having a watchdog unit (110) which is monolithically integrated into and/or onto the substrate (102) and has the purpose of generating a watchdog signal in the case of a malfunction of a functional unit (116), which can be coupled to the watchdog unit (110), of the vehicle (200), wherein the limp home unit (104) is configured to activate the limp home operating mode in reaction to the watchdog signal.

4. Circuit (100) according to one of Claims 1 to 3, wherein in the limp home operating mode the vehicle (200) can maintain an emergency operating state despite the presence of a malfunction.

5. Circuit (100) according to one of Claims 1 to 4, wherein the surroundings warning unit (108) is configured to control the generation of a flashing visual signal on the outside of the vehicle (200), in particular at a flashing indicator light of the vehicle (200), in the case of the limp home operating mode.

6. Circuit (100) according to one of Claims 1 to 5, wherein the limp home unit (104) is configured to generate the control signal in such a way that by means of the control signal it is determined what function or functions of the vehicle (200) can be activated in the limp home operating mode by the user.

7. Circuit (100) according to one of Claims 1 to 6, wherein the limp home unit (104) is configured to generate the control signal to control the surroundings warning unit (106, 108).

8. Circuit (400) according to one of Claims 1 to 7, wherein the limp home unit (104) and the surroundings warning unit (106, 108) are configured to make available the control signal and the surroundings warning signal to a microcontroller (202) which is provided externally with respect to the substrate (102).

9. Circuit (100) according to one of Claims 1 to 8, configured as an application-specific integrated circuit.

10. Vehicle (200) having a monolithically integrated circuit (100) according to one of Claims 1 to 9 for generating control signals for operating the vehicle (200) in a limp home operating mode.

11. Vehicle (200) according to Claim 10, selected from a group comprising an automobile, a passenger motor vehicle, a lorry, a bus, a train, an aircraft and a ship.

12. Method for carrying out a limp home operating mode of a vehicle (200) by means of a monolithically integrated circuit (100), wherein the method comprises:
generating a control signal for controlling the limp home operating mode of the vehicle (200) by means of a limp home unit (104) which is monolithically integrated into and/or onto a substrate (102),
generating a surroundings warning signal for warning the surroundings of the vehicle (200) in the case of the limp home operating mode by means of a surroundings warning unit (106, 108) which is monolithically integrated into and/or onto the substrate (102),
configuring the surroundings warning unit (106) to control the generation of a continuous visual signal on the outside of the vehicle (200), in particular at a rear light of the vehicle (200), in the case of the limp home operating mode,
configuring the surroundings warning unit (106) to use a brake light as a rear light in order to generate the continuous visual signal, and
configuring the surroundings warning unit (106) to reduce a usual power level of the brake light in order to generate the continuous visual signal.

13. Computer-readable storage medium in which a program for carrying out a limp home operating mode of a vehicle (200) is stored, which program is configured to carry out or control the method according to Claim 12 on a monolithically integrated circuit (100).

14. Program element for carrying out a limp home operating mode of a vehicle (200) which, when it is executed by a processor, is configured to carry out or control the method according to Claim 12 on a monolithically integrated circuit (100).

## Revendications

1. Circuit (100) intégré monolithique pour un véhicule (200), le circuit (100) comprenant :
un substrat (102) ;
une unité de mode de secours *(Limp Home)* (104) intégrée monolithique destinée à la génération d'un signal de commande pour commander un mode de fonctionnement de secours *(Limp Home)* du véhicule (200) ;
une unité d'alarme d'environnement (106, 108) intégrée de manière monolithique dans et/ou sur le substrat (102), destinée à la génération d'un signal d'alarme d'environnement du véhicule (200) en cas de mode de fonctionnement de secours *(Limp Home),*
l'unité d'alarme d'environnement (106) étant créée pour commander la génération d'un signal optique permanent sur un côté extérieur du véhicule (200), en particulier sur un feu arrière du véhicule (200), en cas de mode de fonctionnement de secours *(Limp Home),*
l'unité d'alarme d'environnement (106) étant créée pour utiliser un feu stop en tant que feu arrière pour la génération d'un signal optique permanent, et
l'unité d'alarme d'environnement (106) étant créée pour réduire une puissance normale du feu stop pour la génération du signal optique permanent.

2. Circuit (100) selon la revendication 1, créé en tant que System Basis Chip.

3. Circuit (100) selon la revendication 1 ou 2, présentant une unité de surveillance (*Watchdog*) (110) intégrée monolithique dans et/ou sur le substrat (102) pour la génération d'un signal de surveillance (*Watchdog*) en cas de dysfonctionnement d'une unité fonctionnelle (116) du véhicule (200), pouvant être couplée à l'unité de surveillance (*Watchdog*), l'unité de secours *(Limp Home)* (104) étant créée pour activer le mode de fonctionnement de secours *(Limp Home)* en réaction au signal de surveillance (*Watchdog*).

4. Circuit (100) selon l'une quelconque des revendications 1 à 3, le véhicule (200) pouvant être maintenu droit, dans le mode de fonctionnement de secours *(Limp Home),* malgré l'existence d'un dysfonctionnement d'un état de fonctionnement d'urgence.

5. Circuit (100) selon l'une quelconque des revendications 1 à 4, l'unité d'alarme d'environnement (108) étant créée pour commander la génération d'un signal clignotant optique sur un côté extérieur du véhicule (200), en particulier sur un clignotant du véhicule (200), en cas de mode de fonctionnement de secours *(Limp Home*).

6. Circuit (100) selon l'une quelconque des revendications 1 à 5, l'unité de secours *(Limp Home)* (104) étant créée pour la génération du signal de commande de sorte qu'à l'aide du signal de commande, il soit possible de déterminer quelle(s) fonction(s) du véhicule (200) est(sont) activable(s) dans l'état de fonctionnement de secours *(Limp Home)* par l'utilisateur.

7. Circuit (100) selon l'une quelconque des revendications 1 à 6, l'unité de secours *(Limp Home)* (104) étant créée pour la génération du signal de commande pour commander l'unité d'alarme d'environnement (106, 108).

8. Circuit (400) selon l'une quelconque des revendications 1 à 7, l'unité de secours *(Limp Home)* (104) et l'unité d'alarme d'environnement (106, 108) étant créées pour mettre le signal de commande et le signal d'alarme d'environnement à disposition d'un microcontrôleur (202) prévu à l'extérieur du substrat (102).

9. Circuit (100) selon l'une quelconque des revendications 1 à 8, crée en tant que Circuit intégré propre à une application *(Application Specific Integrated Circuit).*

10. Véhicule (200) présentant un circuit (100) intégré monolithique selon l'une quelconque des revendications 1 à 9, destiné à la génération de signaux de commande pour l'utilisation du véhicule (200) en mode de fonctionnement de secours *(Limp Home*).

11. Véhicule (200) selon la revendication 10, choisi parmi un groupe comprenant une automobile, un véhicule personnel, un poids-lourd, un bus, un train, un avion et un bateau.

12. Procédé de réalisation d'un mode de fonctionnement de secours *(Limp Home)* d'un véhicule (200) au moyen d'un circuit (100) intégré monolithique, ce procédé présentant :
la génération d'un signal de commande pour commander le mode de fonctionnement de secours *(Limp Home)* du véhicule (200) au moyen d'une unité de secours *(Limp Home)* (104) intégrée monolithique dans et/ou sur un substrat (102),
la génération d'un signal d'alarme d'environnement pour l'alarme d'un environnement d'un véhicule (200) en cas de mode de fonctionnement de secours *(Limp Home)* au moyen d'une unité d'alarme d'environnement (106, 108) intégrée de manière monolithique dans et/ou sur le substrat (102),
la création de l'unité d'alarme d'environnement (106) pour commander la génération d'un signal optique permanent sur un côté extérieur du véhicule (200), en particulier sur un feu arrière du véhicule (200), en cas de mode de fonctionnement de secours *(Limp Home),*
la création de l'unité d'alarme d'environnement (106) pour utiliser un feu stop en tant que feu arrière pour la génération du signal optique permanent, et
la création de l'unité d'alarme d'environnement (106) pour réduire une puissance normale du feu stop pour la génération du signal optique permanent.

13. Support de d'enregistrement lisible par ordinateur, dans lequel est enregistré un programme permettant d'exécuter un mode de fonctionnement de secours *(Limp Home)* d'un véhicule (200), ce programme étant créé pour exécuter ou commander le procédé selon la revendication 12 sur un circuit (100) intégré monolithique.

14. Elément de programme d'exécution d'un mode de fonctionnement de secours *(Limp Home)* d'un véhicule (200), qui, lorsqu'il est exécuté par un processeur, est créé pour l'exécution ou la commande du procédé selon la revendication 12 sur un circuit (100) intégré monolithique.
